# FASCICULE DE BREVET EUROPEEN

(11) **EP 3 395 167 B1**
(45) Date de publication et mention de la délivrance du brevet: **16.06.2021**
(21) Numéro de dépôt: 17167905.3
(22) Date de dépôt: 25.04.2017
(51) Int. Cl.: A01K 39/012, A01K 5/02, A01K 39/01

(54) **DISPOSITIF POUR LE SUIVI INDIVIDUALISE DE L'INDICE DE CONSOMMATION DE VOLAILLES ET INSTALLATION COMPORTANT LEDIT DISPOSITIF**
VORRICHTUNG ZUR INDIVIDUALISIERTEN NACHVERFOLGUNG DES GEFLÜGELFLEISCH-KONSUMINDEXES, UND ANLAGE, DIE EINE SOLCHE VORRICHTUNG UMFASST
DEVICE FOR INDIVIDUAL TRACKING OF THE POULTRY CONSUMPTION INDEX AND FACILITY COMPRISING SAID DEVICE

(43) Date de publication de la demande: 31.10.2018
(73) Titulaire: SASSO, 40630 Sabres (FR)
(72) Inventeur: ARBEAU, Thierry, 40500 Montaut (FR); SALLES, Laurent, 40000 Mont-de-Marsan (FR)
(74) Mandataire: A.P.I. Conseil

(56) Documents cités:
- WO-A1-97/04646
- FR-A1- 2 998 135
- US-A- 2 457 432

## Description

L'invention concerne le domaine de l'élevage de volailles, et plus particulièrement de la sélection de volailles. L'invention se rapporte à un dispositif pour le suivi individualisé de l'indice de consommation de volailles, ainsi qu'à une installation comportant une pluralité de dispositifs pour le suivi individualisé.

### [Art antérieur]

L'élevage de volailles, et notamment l'élevage de poulets, consiste le plus fréquemment en un élevage en groupe au sol où l'alimentation des volailles se fait par exemple avec des mangeoires communes auprès desquelles les animaux sont libres d'aller et venir. Il a notamment été proposé des systèmes permettant de contrôler la distribution de grains par exemple de façon à obtenir une libération d'aliment par gravité (US2457432) ou à protéger le grain de parasites (WO9704646).

Dans ces mangeoires communes, une volaille peut réaliser une prise alimentaire différentes des autres volailles, mais également variable dans le temps, et il est difficile de déterminer à un instant donné la consommation individuelle et l'impact de cette alimentation sur le poids de ladite volaille. Pourtant, dans le cadre d'une gestion optimisée d'un élevage de volaille ou de la sélection de volailles, il est souhaitable de suivre l'indice de consommation d'une volaille de manière individualisée. Il est en particulier important de pouvoir suivre la consommation des aliments par les animaux, pour pouvoir la corréler à leur croissance (augmentation du poids vif), et évaluer ainsi l'indice de consommation des aliments par les volailles. L'indice de consommation de volaille correspond au rapport quantité d'aliment consommée par la volaille / gain de poids de la volaille. Dans la pratique actuelle, ce suivi de l'indice de consommation est généralement réalisé autour de la sixième semaine, de façon manuelle. Une telle pratique est d'une part chronophage et d'autre part elle ne tient pas compte de la variation en fonction de l'âge des volailles et de la variabilité interindividuelle du métabolisme. Une telle variabilité interindividuelle ne peut être complètement prise en compte qu'avec une mesure réalisée tout au long de la croissance de la volaille.

Afin de réaliser un tel suivi tout au long de la croissance de la volaille, il est nécessaire de disposer d'un outil pouvant mesurer la consommation alimentaire dès les premiers jours de la volaille jusqu'à son âge adulte.

Dans les élevages en groupe au sol, on ne peut généralement connaître la quantité moyenne d'aliments consommée par volaille, qu'en divisant la quantité totale d'aliments consommés par le nombre de volailles présentes dans le lot. Cela ne permet toutefois pas un suivi individuel précis de la consommation et n'est donc pas exploitable en vue de la sélection des animaux ou d'une gestion individualisée. Dans l'art antérieur, il existe des systèmes permettant de suivre de façon automatisée la prise alimentaire individuelle des volailles. Néanmoins, comme cela est décrit dans la demande de brevet FR2893822, cette prise alimentaire n'est pas corrélée à un système de mesure individualisée du poids de la volaille. Dans ce cas, ces systèmes de suivi individualisé de la prise alimentaire peuvent être couplés à des systèmes automatiques de pesée des volailles mais les systèmes actuels de mesure automatisés du poids des volailles ne sont pas performants car en pratique d'une part plusieurs volailles montent sur le poste de pesée et d'autre part la mesure n'est pas individualisée, et ne permet pas l'identification de la volaille. Ainsi, l'analyse se fait au niveau d'un ensemble d'individus et nécessite un retraitement statistique de l'information. Actuellement, il n'est donc possible que de réaliser des estimations du poids vif des volailles à partir des informations du groupe.

D'autres systèmes, manuels ou automatiques, reposent sur des dispositifs dans lesquels la volaille est enfermée pour y manger et dans lesquels le poids de la prise alimentaire est suivi (FR2998135). Néanmoins, les volailles sont des animaux habitués à vivre en groupe et dans le cadre d'un élevage en groupe, un tel isolement pour manger perturbe les volailles et donc la prise alimentaire. De plus, une volaille élevée en groupe au sol n'aura pas les mêmes dépenses physiques qu'une volaille élevée en cage sur une surface restreinte.

Ainsi, il existe un besoin pour de nouveaux dispositifs ou installations, pour le suivi individualisé de l'indice de consommation de volailles capables, de répondre aux problèmes engendrés par les méthodes existantes.

### [Problème technique]

L'invention a donc pour but de remédier aux inconvénients de l'art antérieur.

En particulier, l'invention a pour but de proposer un dispositif amélioré pour le suivi individualisé de l'indice de consommation de volailles, ledit dispositif permettant de mesurer la consommation individuelle de volaille, quel que soit son âge, et permettant notamment des mesures fiables, individualisées et automatisées de la prise alimentaire et du poids vif d'une volaille de façon à calculer son indice de consommation sur une période donnée. En outre, ce dispositif a pour objectif de s'adapter aux besoins des volailles élevées en groupe au sol et de ne pas les perturber lors de la prise alimentaire.

L'invention a en outre pour but de proposer une installation comportant une pluralité de dispositifs pour le suivi individualisé, ladite installation permettant de mesurer la consommation individuelle d'animaux élevés en groupe au sol, de façon précise, simple, et à coût réduit.

### [Brève description de l'invention]

A cet effet, l'invention porte sur un dispositif selon la revendication 1 pour le suivi individualisé de l'indice de consommation de volailles comprenant :
- un poste de pesée, ledit poste de pesée comportant des parois latérales et une paroi frontale définissant un volume interne disponible apte à contenir une volaille,
- un moyen d'identification d'une volaille, apte à identifier une volaille positionnée dans le volume interne disponible du poste de pesée et à fournir une information d'identification de la volaille,
- un moyen de pesée d'une volaille, ledit moyen de pesée d'une volaille étant apte à mesurer le poids d'une volaille positionnée dans le volume interne disponible du poste de pesée et à fournir une information de poids de la volaille,
- une mangeoire contenant des aliments pour volaille, couplée à un moyen de pesée des aliments, ledit moyen de pesée des aliments étant apte à mesurer le poids des aliments contenus dans la mangeoire et à fournir une information de poids de l'aliment, ladite mangeoire comprenant une zone de distribution, ladite zone de distribution étant accessible seulement à une volaille positionnée dans le volume interne disponible du poste de pesée, et
- un module de traitement de données couplé au moyen de pesée de la volaille et au moyen de pesée de l'aliment apte à générer un indice de consommation à partir des informations de poids fournies par le moyen de pesée et par le moyen de pesée des aliments, pour la volaille identifiée à partir de l'information d'identification fournie.

Ainsi, grâce à l'invention, il est possible de réaliser un suivi individualisé de l'indice de consommation de volaille à partir d'un seul dispositif capable de réaliser la pesée de l'alimentation ingérée par la volaille, la pesée de la volaille et l'identification de la volaille.

**Selon d'autres caractéristiques du dispositif** :
- le poste de pesée comporte sur une paroi frontale comportant une ouverture apte à laisser passer la tête de la volaille, ladite ouverture présentant une forme définie par une hauteur et une largeur variable et, ladite largeur augmentant avec la valeur de hauteur sur une distance représentant plus de la moitié de la hauteur de ladite ouverture. Une telle forme d'ouverture permet de s'adapter à la volaille quel que soit son âge. Ainsi, il n'est pas nécessaire de modifier l'ouverture manuellement ou mettre en place un dispositif de modification automatique de la taille de ladite ouverture car celle-ci possède une forme adaptée dont la largueur augmente avec la hauteur et donc avec la taille de la volaille.
- l'ouverture présente sensiblement une forme de trapèze ou de triangle, la base du triangle ou la base la plus longue du trapèze étant orientée vers la partie supérieure de la paroi frontale.
- les parois latérales et la paroi frontale du poste de pesée ne sont pas mobiles.
- le poste de pesée est associé à un système de contention comportant au moins un moyen d'adaptation du volume et/ou au moins un moyen d'obturation d'une partie de l'entrée du poste de pesée, ledit moyen d'adaptation du volume étant apte à réduire le volume interne disponible dudit poste de pesée de façon à l'adapter à la taille de ladite volaille et ledit moyen d'obturation d'une partie de l'entrée du poste de pesée étant apte à empêcher l'entrée simultanée de plusieurs volailles dans le volume interne disponible dudit poste de pesée. Ainsi, le volume disponible interne du poste de pesage peut être modifié aisément en substituant un premier moyen d'adaptation du volume dédié par exemple aux poulets de 2 semaines ou moins par un moyen d'adaptation du volume dédié aux poulets de plus de 3 semaines. Le poste de pesée présente en outre un volume disponible interne adapté pour accueillir une seule volaille ainsi, il n'y a pas plusieurs volailles dans le poste de pesée et donc la mesure est fiable.
- le système de contention est amovible. Ainsi, le volume interne disponible est aisément adaptable afin de suivre l'évolution de la taille de la volaille au cours de sa croissance.
- le poste de pesée comprend des organes de guidage pour le système de contention (60) tels que des bras articulés, de rainures, des tiges télescopiques, des encoches ou des tasseaux.
- la mangeoire est couplée à au moins un moyen de déplacement apte à déplacer la mangeoire au moins selon un axe, ledit axe étant sélectionné parmi un axe vertical, horizontal ou transversal, de façon à ajuster la distance entre la zone de distribution de l'aliment de la mangeoire et le poste de pesée, à la taille de la volaille et à l'évolution de sa morphologie. Ainsi, le dispositif comporte des moyens de déplacement permettant de contrôler la distance entre la zone de distribution de l'alimentation et la face frontale du poste de pesage de façon à permettre une prise de l'alimentation optimale quel que soit l'âge de la volaille.
- l'au moins un moyen de déplacement est apte à déplacer la mangeoire au moins selon un axe horizontal ou un axe vertical. Selon l'invention, l'au moins un moyen de déplacement est apte à déplacer la mangeoire selon un axe horizontal et un axe vertical.
- le moyen d'identification comporte un lecteur radiofréquence (par exemple RFID ou NFC) apte à recevoir une information provenant d'une étiquette radiofréquence fixée à ladite volaille. La technologie RFID est particulièrement adaptée à ce type de suivi.
- le lecteur radiofréquence est positionné à proximité d'une paroi frontale ou latérale du poste de pesée. Un tel positionnement permet d'identifier une volaille lors d'une pesée individuelle sans que des volailles situées à proximité ne voient leur étiquette identifiée à la place de la volaille pesée.

L'invention porte en outre sur une installation selon la revendication 12, comprenant au moins deux dispositifs pour le suivi selon l'invention.

### Selon d'autres caractéristiques optionnelles de l'installation :

- les postes de pesée des dispositifs pour le suivi sont fixés directement ou indirectement à une première traverse et les mangeoires des dispositifs pour le suivi sont fixées directement ou indirectement à une seconde traverse.
- les mangeoires sont fixées directement ou indirectement à une traverse, ladite traverse étant apte à être déplacée, par le moyen de déplacement. Cela permet d'ajuster la distance entre la zone de distribution de l'aliment de la mangeoire et le poste de pesée, en fonction de la taille de la volaille.

D'autres avantages et caractéristiques de l'invention apparaitront à la lecture de la description suivante donnée à titre d'exemple illustratif et non limitatif, en référence aux Figures annexées qui représentent :
- Figure 1, une représentation schématique partielle et en perspective d'un dispositif pour le suivi individualisé selon l'invention.
- Figures 2A à 2D, des représentations schématiques de différentes formes de l'ouverture sur la paroi frontale du poste de pesée.
- Figure 3, une représentation en perspective d'un poste de pesée comportant un moyen d'adaptation du volume et relié à une traverse par l'intermédiaire d'un moyen de pesée d'une volaille.
- Figures 4A à 4C, des représentations graphiques de différentes formes des moyens d'adaptation du volume et d'obstruction selon l'invention.
- Figures 5A et 5B, deux vues en perspective avant (Fig.5A) et arrière (Fig.5B) illustrant l'agencement de quatre dispositifs pour le suivi selon l'invention montés sur l'armature de l'installation pour le suivi selon l'invention.

### Description de l'invention]

On entend par « volume disponible interne » au sens de l'invention, le volume au sein du poste de pesée, disponible pour une volaille. La volaille, au sein du poste de pesée, est de préférence positionnée sur un plateau de pesée.

Par « adapté pour accueillir une volaille », on entend au sens de l'invention que le volume disponible interne ne permet qu'à une seule volaille de se positionner au sein du poste de pesée.

Le terme «sensiblement» ou l'expression «sensiblement identique» selon l'invention correspond à une valeur variant de moins de 30 % par rapport à la valeur comparée, de préférence de moins de 20 %, de façon encore plus préférée de moins de 10 %. Lorsque sensiblement identique est utilisée pour comparer des formes alors la forme vectorisée varie de moins de 30 % par rapport à la forme vectorisée comparée, de préférence de moins de 20 %, de façon encore plus préférée de moins de 10 %.

Le terme « amovible » au sens de l'invention correspond à la capacité à être détachée, enlevée ou démontée aisément sans avoir à détruire des moyens de fixation soit parce qu'il n'y a pas de moyen de fixation soit parce que les moyens de fixation sont aisément et rapidement démontables (e.g. encoche, vis, languette, ergot, clips). Par exemple, par amovible, il faut comprendre que l'objet n'est pas fixé par soudure ou par un autre moyen non prévu pour permettre de détacher l'objet.

Dans la suite de la description, on entend par « lecteur radiofréquence» un dispositif électronique comportant au moins un émetteur/récepteur radiofréquence et au moins une antenne radiofréquence telle qu'une antenne RFID (acronyme anglais de " Radio- Frequency IDentification " signifiant identification par radiofréquences). Une antenne RFID est apte à émettre des ondes électromagnétiques capables d'activer une étiquette RFID se trouvant dans son champ de rayonnement électromagnétique. Le lecteur radiofréquence transmet à travers des ondes électromagnétiques, émises par l'antenne radiofréquence, une requête d'informations aux étiquettes radiofréquence situées dans son champ de rayonnement puis il réceptionne les réponses et les transmet aux applications concernées. La fréquence utilisée est variable selon les applications visées et les performances recherchées. La communication entre le lecteur radiofréquence et l'étiquette radiofréquence est réalisée par ondes électromagnétiques (de type radiofréquence) au moyen des antennes radiofréquence présentes dans le lecteur et dans l'étiquette radiofréquence. Le lecteur radiofréquence se présente en pratique sous la forme d'un dispositif électronique comportant généralement une puce de circuit intégré et au moins une antenne radiofréquence couplée à ladite puce de circuit intégré. La puce de circuit intégré est apte à générer, et à mettre en forme, le signal numérique contenant l'information à transmettre aux radio-étiquettes, ainsi qu'à traiter le signal de retour. Plusieurs technologies radiofréquence peuvent être utilisées dans le cadre de l'invention telle que le Bluetooth, le Wifi ou le NFC (Near Field Communications). Les technologies radiofréquence préférées sont le RFID ou le NFC.

On entend par « antenne radiofréquence» au sens de l'invention un moyen couplé à un lecteur radiofréquence, à une étiquette NFC ou à une étiquette RFID apte à recevoir et/ou émettre des ondes électromagnétiques (de type radiofréquences). Par exemple, dans le domaine de la RFID, différentes radiofréquences peuvent être utilisées : entre 125 kHz et 135 kHz (Basses Fréquences), 13,56 MHz (Hautes Fréquences), 860-960 MHz (Ultra Hautes Fréquences), 2,45 GHz (bande micro-ondes) et 3,1-10,6 GHz (bande ULB, Ultra Large Bande, ou UWB, pour Ultra WideBand).

On entend par « étiquette RFID », aussi appelé tag-RFID, transpondeur ou marqueur, un dispositif comportant généralement un composant électronique tel qu'une puce de circuit intégré et une antenne radiofréquence ou RFID apte à interagir avec le lecteur radiofréquence ou RFID. Lorsque la technologie radiofréquence utilisée est la technologie RFID alors, il existe plusieurs catégories d'étiquette RFID :
- l'étiquette RFID passive, n'intégrant pas d'alimentation électrique. L'étiquette RFID passive, utilise l'onde issue du lecteur RFID pour alimenter le circuit électronique embarqué ;
- l'étiquette RFID semi-passive intégrant une alimentation utilisée pour apporter de l'énergie au circuit électronique du tag ou à un capteur connecté audit circuit ;
- l'étiquette RFID active intégrant un émetteur radiofréquence et par conséquent une alimentation (batteries, piles). Cette étiquette peut interagir de manière autonome avec son environnement grâce à sa batterie.

Dans la suite de la description, les mêmes références sont utilisées pour désigner les mêmes éléments.

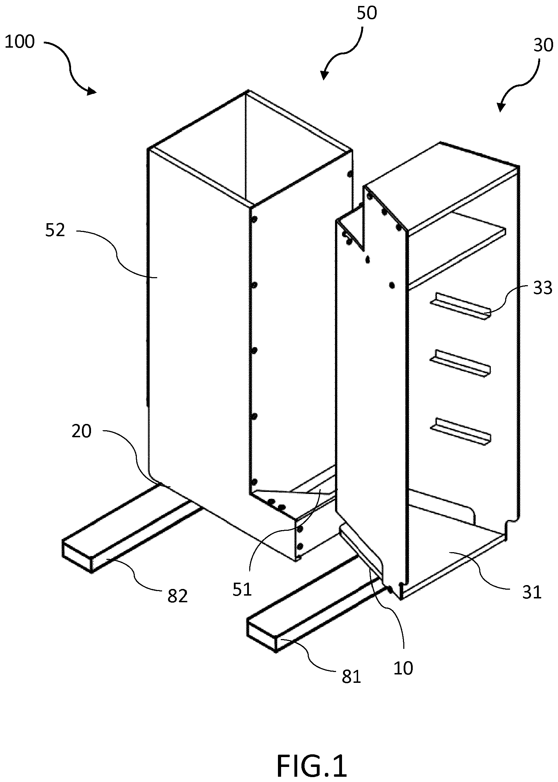

. Comme illustré par le schéma de la figure 1, le dispositif 100 pour le suivi individualisé comprend un moyen de pesée 10 d'une volaille, un moyen de pesée 20 des aliments, un poste de pesée 30 dont le volume disponible interne est adapté pour accueillir une volaille, ledit poste de pesée 30 étant couplé au moyen de pesée 10 d'une volaille, un moyen d'identification 40 de ladite volaille, et une mangeoire 50, couplée au moyen de pesée 10 des aliments contenus dans la mangeoire 50, ladite mangeoire 50 comprenant une zone de distribution 51 des aliments accessible seulement à ladite volaille.

Le poste de pesée 30 et la mangeoire peuvent être placés respectivement sur une traverse avant 81 et sur une traverse arrière 82. En effet, de façon préférée, le poste de pesée 30 et la mangeoire 50 sont positionnés sur des éléments distincts d'une armature 80 assurant le maintien des différents éléments constituant le dispositif 100 pour le suivi individualisé.

Le poste de pesée 30 est de préférence positionné en vis-à-vis de la mangeoire 50. La paroi frontale du poste de pesée 30, faisant face à la mangeoire 50, est de préférence positionnée à une distance comprise entre 1 cm et 25 cm, de façon plus préférée entre 2 cm et 15 cm, du bord de la zone de distribution 51 des aliments faisant face au poste de pesée 30. Selon l'invention, comme cela sera détaillé par la suite, la distance entre la paroi frontale du poste de pesée 30 et le bord de la zone de distribution 51 est contrôlée par un moyen de déplacement.

**Le poste de pesée 30** présente un volume disponible interne adapté pour accueillir une volaille. En effet, dans le cadre d'un suivi individualisé il est souhaitable que les volailles ne puissent intégrer le poste que de façon individuelle. Typiquement, le poste de pesée comporte un plateau de pesée 31 sur lequel une volaille devra se positionner si elle souhaite accéder à l'alimentation contenue dans la mangeoire 50 et accessible via la zone de distribution 51.

En outre, le poste de pesée 30 peut avantageusement comporter, sur une paroi frontale, une ouverture 32 apte à laisser passer la tête de la volaille, ladite ouverture 32 présentant une forme définie par une largeur variable et une hauteur, ladite largeur variable augmentant avec la valeur de hauteur sur une distance représentant plus de la moitié de la hauteur de ladite ouverture. Cette forme particulière permet d'éviter d'avoir à dimensionner l'ouverture selon la taille de la tête des volailles du lot en élevage, ou de l'adapter en fonction de l'âge des volailles. La forme proposée par les inventeurs, dans le cadre du dispositif 100 pour le suivi individualisé selon l'invention permet une ouverture accessible aux volailles quel que soit leur âge tout en limitant la possibilité à une seconde volaille d'accéder à l'alimentation lorsque qu'une première volaille est positionnée sur le poste de pesée 30. Ainsi, il n'est pas nécessaire d'adapter la taille de l'ouverture 32 tout au long du développement de la volaille, du plus jeune âge (quelques jours) jusqu'à l'âge adulte (plusieurs semaines). Cela participe aux avantages de l'invention la rendant adaptée pour des élevages de volailles où l'élevage se fait sur de longues périodes, par exemple lors de la sélection de volailles. De préférence, l'ouverture est perpendiculaire au sol comme illustré sur la figure 1.

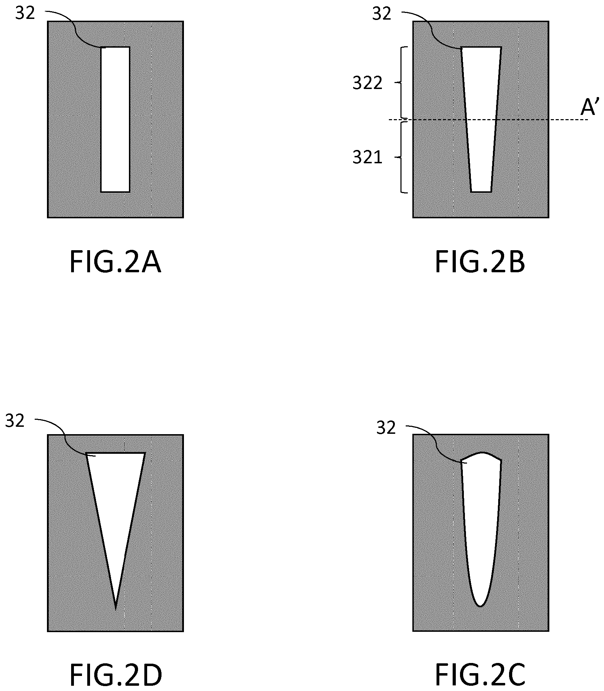

En particulier, l'ouverture 32 est positionnée de façon centrée par rapport à la mangeoire 50 et centrée par rapport aux parois latérales du poste de pesée 30. A titre d'exemple non limitatif, et comme cela est présenté aux figures 2A à 2D, l'ouverture peut avoir une forme de trapèze (Fig.2B), de triangle (Fig.2C) ou sensiblement de trapèze ou de triangle (Fig.2D). L'ouverture peut également présenter une largeur constante sur toute sa hauteur comme cela est présenté en figure 2A. L'ouverture 32 peut présenter une hauteur comprise entre 15 et 65 cm, de préférence entre 25 et 50 cm. Une telle hauteur permet un accès facilité à l'alimentation par la volaille et cela tout au long de sa croissance. En outre, une absence de rebord inférieur sur lequel une volaille pourrait venir s'appuyer et ainsi fausser la mesure du poids de la volaille, comme cela pourrait être le cas avec une ouverture circulaire, est avantageuse.

La largeur de l'ouverture 32 est comprise par exemple entre 4 cm et 15 cm. De façon plus particulière, l'ouverture 32 peut présenter une largeur comprise, sur sa partie inférieure 321 entre 4 cm et 8 cm et sur la partie supérieure 322 entre 6 cm et 15 cm. Les parties inférieures 321 et supérieures 322 correspondent chacune à une moitié de la hauteur de l'ouverture 32 (e.g. moitié inférieure et moitié supérieure).

Selon l'invention, le poste de pesée 30 ne comporte pas de porte. En effet, les volailles lors de leur prise alimentaires peuvent être perturbées si elles viennent à être enfermées dans un espace clos de petite dimension. Un tel enfermement peut avoir un impact négatif sur la prise alimentaire et donc la prise de poids. Ainsi, l'invention présente l'avantage de pouvoir permettre un suivi individualisé sans avoir à enfermer la volaille dans le poste de pesée 30.

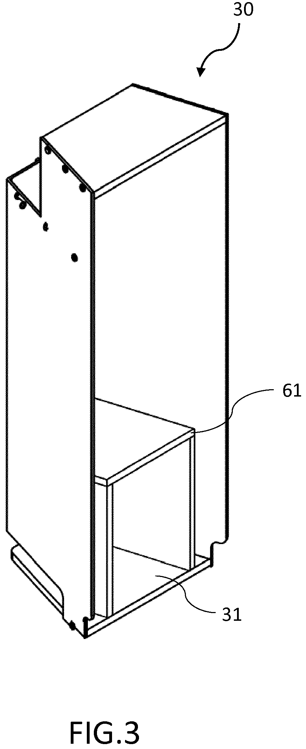

Le poste de pesée 30 présente par exemple un volume total interne compris entre 10 000 cm³ et 20 000 cm³, de préférence entre 14 000 cm³ et 18 000 cm³. En outre, comme cela est présenté en figure 1 et 3, le poste de pesée 30 présente de préférence une face avant, en vis à vis de la mangeoire 50, plus étroite que la face arrière. Par exemple, la largueur de la face avant représente avantageusement moins de 50 % que la largeur de la face arrière.

Chaque dispositif 100 pour le suivi individualisé comprend par ailleurs **un moyen de pesée 10 d'une volaille** couplé au poste de pesée 30 et permettant de mesurer le poids du poste de pesée 30 et donc, via une fonction de tare du moyen de pesée 10 d'une volaille, d'en déduire le poids de la volaille.

Un tel moyen de pesée 10 d'une volaille peut permettre la mesure du poids de la volaille ainsi que son évolution dans le temps, et donc, en corrélant cette donnée de poids de volaille aux données d'identification des volailles, d'en déduire l'évolution du poids de la volaille au cours du temps. Le moyen de pesée 10 d'une volaille peut par exemple être un capteur de flexion, un capteur de force ou un capteur de pression, produisant un signal électrique, optique ou magnétique proportionnel à la force appliquée sur le plateau de pesée 31 par la volaille. Plus particulièrement, les capteurs utilisés peuvent par exemple être des jauges de contrainte, des capteurs piézoélectriques, des capteurs piézorésistifs ou des capteurs de pression capacitifs.

Selon un mode de réalisation préféré, le moyen de pesée 10 d'une volaille comprend au moins un capteur, de préférence de type piézoélectrique ou piézocapacitif, ou au moins une jauge de contrainte, positionné entre une traverse avant 81 et le poste de pesée 30. De façon encore plus préférée, le poste de pesée 30 est reliée à une traverse avant 82 par au moins un capteur de type piézoélectrique ou piézorésistif ou par une jauge de contrainte.

Les inventeurs ont développé un **système de contention 60** de volailles pour limiter plus efficacement l'accès à la mangeoire 50 à une seule volaille sans toutefois la contraindre. Cette absence de contrainte permet de ne pas modifier son comportement naturel et donc sa prise alimentaire contrairement à ce que pourrait induire la présence d'une porte sur le dispositif selon l'invention. Le système de contention 60 comporte au moins un moyen 61 d'adaptation du volume et/ou au moins un moyen d'obturation 62 d'une partie de l'entrée du poste de pesée 30. Ainsi, le poste de pesée 30 peut être associé à au moins un moyen 61 d'adaptation du volume apte à modifier le volume disponible interne dudit poste de pesée 30 pour l'adapter à la taille de ladite volaille. Le poste de pesée 30 peut être associé à au moins un moyen 62 d'obturation d'une partie de l'entrée du poste de pesée 30 pour empêcher l'entrée simultanée de plusieurs volailles. De façon préférée, le système de contention 60 est amovible. C'est-à-dire que le ou les moyens 61 d'adaptation du volume ou le ou les moyens 62 d'obturation sont amovibles, indépendants du poste de pesée 30 et peuvent être ainsi dissociés du poste de pesée rapidement. Cela permet par exemple de rapidement nettoyer le poste de pesée 30. En outre, les moyens d'adaptation du volume 61 et d'obstruction 62 peuvent être mobiles de façon à adapter le volume disponible interne du poste de pesée 30 à la taille de la volaille.

De préférence, le moyen d'adaptation 61 du volume permet de réduire la hauteur ainsi que la largeur du volume interne disponible du poste de pesée 30. En effet, en l'absence d'une réduction de la hauteur, les volailles peuvent monter les unes sur les autres de façon à atteindre la zone de distribution 51. Cela est particulièrement vrai lors des premières semaines de l'élevage.

Le moyen d'obturation 62 du poste de pesée 30 est agencé de manière à limiter, au volume disponible interne tel que modifié par le moyen 61 d'adaptation du volume, l'accès au poste de pesée 30. Ainsi, le moyen d'obturation 62 permet d'éviter que des volailles ne viennent se loger dans le poste de pesée 30 et, bien que ne pouvant atteindre la mangeoire, perturbent la pesée.

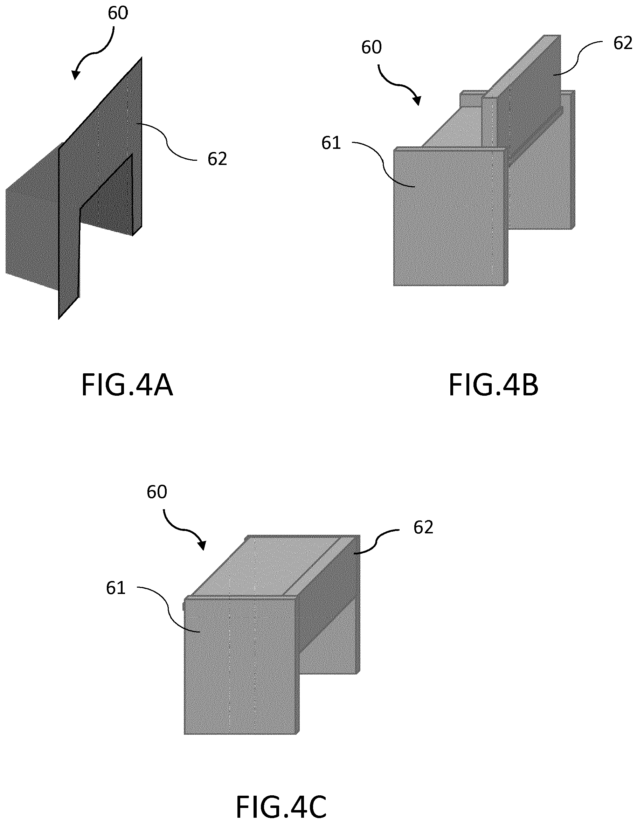

Le schéma de la figure 3, illustre un moyen d'adaptation 61 du volume sous forme d'un insert apte à réduire le volume disponible interne du poste de pesée 30 pour l'adapter à la taille de ladite volaille. Les figures 4A à 4C représentent plusieurs systèmes de contention 60 composés de moyens 61 d'adaptation du volume et/ou de moyens d'obturation 62 et aptes à réduire le volume interne du poste de pesée 30 accessible à la volaille. De façon particulière, le système de contention 60 consiste en un insert apte à réduire le volume interne du poste de pesée 30 pour l'adapter à la taille de ladite volaille. De façon préférée, le système de contention 60 et plus particulièrement les moyens de d'adaptation 61 du volume et d'obstruction 62 sont constitué d'un assemblage de plaques qui en fonction de leur agencement réduisent plus ou moins le volume interne disponible du poste de pesée 30.

De façon particulièrement préféré les systèmes de contention 60 et plus particulièrement les moyens d'adaptation 61 ou d'obstruction 62 du volume, possèdent tous le même poids quel que soit le volume interne disponible qu'ils sont apte à définir au sein du poste de pesée 30. Ainsi, il n'est pas nécessaire de tarer le moyen de pesée 20 de la volaille lorsque les moyens d'adaptation 61 ou d'obstruction 62 du volume, suite à la croissance des volailles.

Avantageusement, les parois latérales et la paroi frontale du poste de pesée 30 ne sont pas mobiles. En particulier, le poste de pesée 30 peut comprendre des organes de guidage 33 pour le système de contention 60 et plus particulièrement pour l'au moins un moyen d'adaptation 61 du volume et/ou l'au moins un moyen d'obstruction 62 du volume tels que des encoches, des bras articulés, des rainures, des tiges télescopiques ou des tasseaux. De préférence, le poste de pesée 30 comprend des encoches, des rainures ou des tasseaux, aptes à maintenir et positionner l'au moins un moyen d'adaptation 61 du volume et/ou l'au moins un moyen d'obstruction 62 du volume. Ces organes de guidage 33 peuvent être positionnés sur la face interne des parois latérales du poste de pesée 30 comme cela est représenté sur la figure 1 ou encore sur la plateforme de pesée 31.

En outre, chaque dispositif 100 pour le suivi individualisé comprend **une mangeoire 50,** illustrée à la figure 1, qui est destinée à recevoir les aliments à fournir à la volaille. De manière préférée, la mangeoire 50 comprend une réserve 52 destinée à recevoir les aliments. Cette réserve 52 stocke les aliments que la volaille va consommer depuis la zone de distribution 51 de la mangeoire 50.

En outre, cette mangeoire 50 peut être couplée à un circuit d'alimentation capable d'assurer un remplissage régulier de la mangeoire 50 en aliments, de préférence de manière continue. Alternativement, le remplissage des mangeoires 50 peut être réalisé manuellement.

Selon l'invention, au sein du dispositif 100 pour le suivi individualisé selon l'invention, la mangeoire 50 est mobile. Une telle mobilité permet de faciliter la prise alimentaire tout au long de la croissance des volailles. En effet, durant les premiers jours de vie des volailles, la mangeoire 50, et plus particulièrement la zone de distribution 51, doit être au plus proche de la paroi frontale du poste de pesée car la longueur du cou des volailles peut par exemple être de seulement 3 cm. Par contre, au fil des semaines, les volailles grandissent et l'augmentation de la distance entre la mangeoire 50 et le poste de pesée 30 permet de faciliter la prise alimentaire pour les volailles adultes dont le cou peut mesurer jusqu'à 20 cm. Ainsi, selon l'invention, la mangeoire 50 est couplée à au moins un moyen de déplacement apte à déplacer la mangeoire 50 au moins selon un axe, ledit axe étant sélectionné parmi un axe vertical, horizontal ou transversal, de façon à ajuster la distance entre la zone de distribution 51 de l'aliment de la mangeoire 50 et le poste de pesée 30 à la taille de la volaille. Selon l'invention, l'au moins un moyen de déplacement est apte à déplacer la mangeoire 50 selon un axe horizontal et un axe vertical. Outre une amélioration de la prise alimentaire, cet agencement de la mangeoire 50 par rapport au poste de pesée 30, et la possibilité d'éloigner la mangeoire 50, notamment selon un axe horizontal, permet d'obliger les volailles, pour se nourrir, à se positionner convenablement au sein du poste de pesée 30 pour faciliter l'identification de la dite volaille et également améliorer sa pesée.

Chaque dispositif 100 pour le suivi individualisé comprend par ailleurs **un moyen de pesée 20** des aliments, apte à mesurer le poids de la mangeoire 50. Un tel moyen de pesée 20 permet de mesurer le poids de la mangeoire 50 et de suivre son évolution dans le temps, et donc d'en déduire la quantité d'aliments consommés au cours du temps, pour en tirer la consommation individuelle des volailles en corrélant cette donnée de consommation aux données d'identification des volailles. Le moyen de pesée 20 peut par exemple être un capteur de flexion, un capteur de force ou un capteur de pression, produisant un signal électrique, optique ou magnétique proportionnel à la quantité d'aliments présente dans la mangeoire 50. Les capteurs utilisés peuvent par exemple être des jauges de contrainte, des capteurs piézoélectriques, des capteurs piézorésistifs ou des capteurs de pression capacitifs.

Selon un mode de réalisation préféré, le moyen de pesée 20 comprend au moins un capteur, de préférence de type piézoélectrique ou piézocapacitif, ou au moins une jauge de contrainte, positionné entre une traverse arrière 82 et la mangeoire 50. De façon encore plus préférée, le poste de pesée 30 est relié à une traverse arrière 82 par au moins un capteur de type piézoélectrique ou piézorésistif.

Chaque dispositif 100 pour le suivi individualisé comprend en outre **un moyen d'identification 40** adapté pour la lecture d'un code individuel d'identification porté par une volaille. Ce moyen d'identification 40 permet l'identification individuelle de la volaille qui vient se nourrir dans la mangeoire 50 associée au poste de pesée 30. Ainsi, diverses technologies d'identification peuvent être envisagées comme des systèmes de codes, de code-barres, ou de radiofréquence. Le moyen d'identification 40 peut comprendre par exemple une caméra, un scanner à code-barres ou un lecteur radiofréquence. De façon préférée, le moyen d'identification 40 comporte un lecteur radiofréquence apte à recevoir une information provenant d'une étiquette radiofréquence (e.g. RFID ou NFC) fixée à ladite volaille. Ainsi, chaque volaille peut être dotée d'une étiquette radiofréquence (e.g. RFID ou NFC), de préférence encapsulée dans une capsule de verre.

Le lecteur radiofréquence est de préférence positionné à proximité d'une paroi frontale ou latérale du poste de pesée 30. Par « à proximité », il faut comprendre qu'il est disposé sur une paroi latérale ou bien sur la paroi frontale du poste de pesée 30, ou qu'il est intégré dans une desdites parois. Il faut aussi comprendre qu'il peut être positionné à une distance comprise entre 0,1 cm et 10 cm d'une des parois latérales ou frontales du poste de pesée 30. De façon avantageuse, le lecteur radiofréquence (e.g. RFID) est positionné à une distance comprise entre 0,2 cm et 8 cm d'une des parois latérales ou frontales du poste de pesée 30. En effet, un tel positionnement améliore les performances de lecture des étiquettes radiofréquence (e.g. RFID) par le lecteur radiofréquence (e.g. RFID) et réduit les interférences entre les signaux des différentes étiquettes radiofréquence (e.g. RFID).

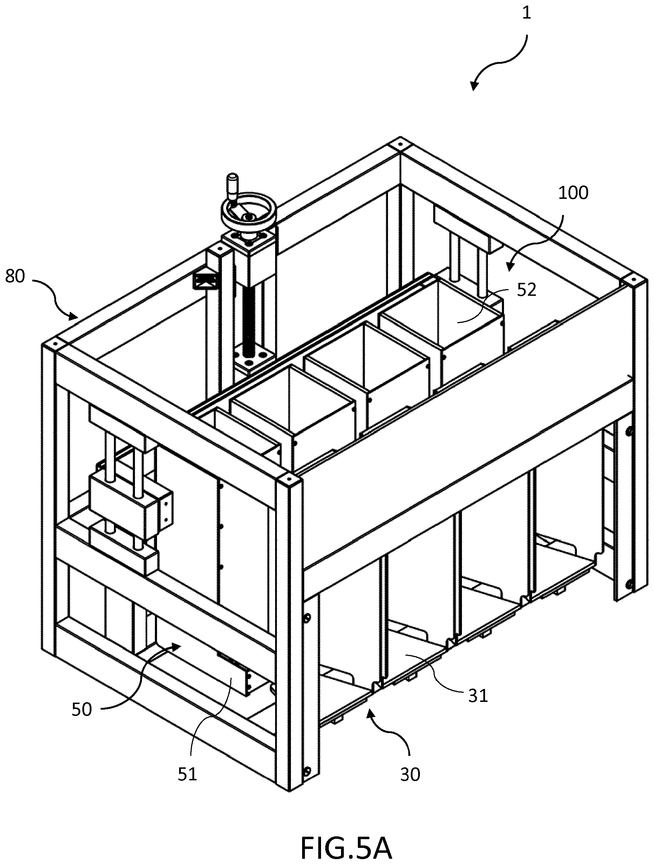

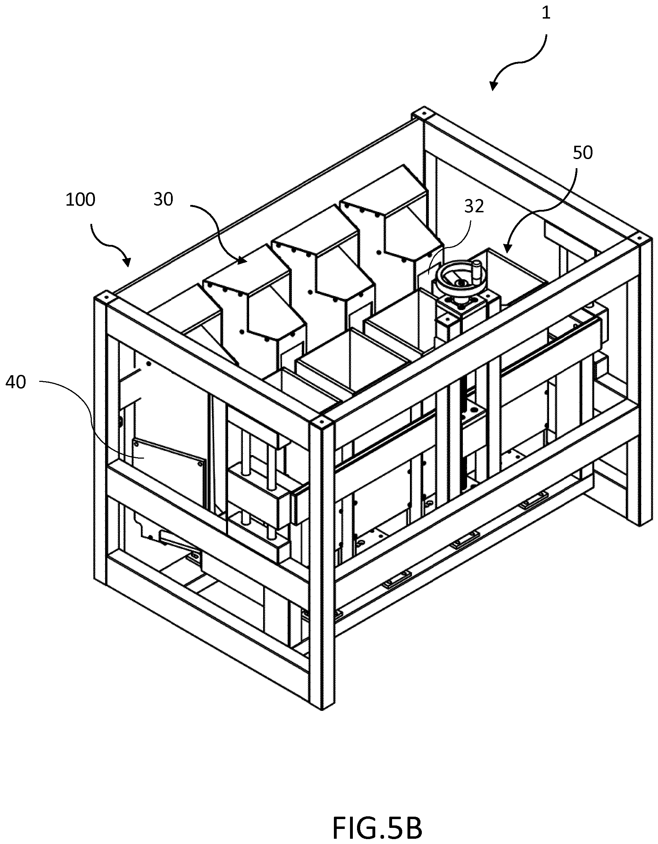

Comme cela est présenté sur les figures 5A et 5B, le dispositif 100 pour le suivi individualisé de l'indice de consommation de volaille peut être intégré à **une installation 1 pour le suivi** comportant plusieurs dispositifs 100 agencés par exemple de façon linéaire. Les dispositifs 100 peuvent être également agencés de façon circulaire ou sous la forme d'un polygone. Plus précisément, l'installation 1 comprend plusieurs dispositifs 100 pour le suivi individualisé qui sont montés sur une seule armature 80 présentant par exemple une forme générale de parallélépipède rectangle telle que représentée sur les figures 5A et 5B.

Le nombre de ces dispositifs 100 pour le suivi individualisé pour une même installation 1 peut être variable. Etant donné la conception du dispositif 100 selon l'invention, il est possible de positionner de façon très rapproché chacun des dispositifs 100 pour le suivi individualisé sans que les volailles ne se gênent. De manière préférée, la distance entre deux dispositifs 100 pour le suivi individualisé adjacents est au plus de 10 cm, de façon plus préférée d'au plus 5 cm. La distance entre deux dispositifs 100 pour le suivi individualisé adjacents peut être évaluée en mesurant la distance entre les deux parois latérales des postes de pesée 30 adjacents. De manière préférée, l'installation 1 pour le suivi proposée comprend entre 2 et 10 dispositifs 100 pour le suivi individualisé, et de façon plus préférée elle comprend entre 2 et 6 dispositifs 100 pour le suivi individualisé.

Comme il ressort des figures 5A et 5B, chaque dispositif 100 pour le suivi individualisé est avantageusement monté sur la même armature 80. Plus particulièrement, tous les postes de pesée 30 sont fixés directement ou indirectement à une première traverse 81 et toutes les mangeoires sont fixées directement ou indirectement à une seconde traverse 82. Lorsque lesdites fixations sont indirectes, elles se font avantageusement par l'intermédiaire de moyens de pesée 10 ou 20 respectivement pour les postes de pesée et les mangeoires.

Comme illustré aux figures 5A et 5B, dans le mode de réalisation présenté, l'installation 1 pour le suivi comporte quatre dispositifs 100 pour le suivi individualisé. Les mangeoires étant fixées sur une traverse arrière 82 de l'armature 80 par l'intermédiaire du dispositif de pesée 30. Les postes de pesée 30 étant fixés sur une traverse avant 81 de l'armature 80 par l'intermédiaire du moyen de pesée 10 d'une volaille. De façon préférée, chaque poste de pesée 30 est relié à une même traverse par au moins un moyen de pesée 10 d'une volaille. De façon préférée, chaque mangeoire 50 est reliée à une même traverse par au moins un moyen de pesée 20. Le fait d'utiliser une même traverse d'une part pour les tous les postes de pesée 30 et d'autre part pour toutes les mangeoires 50 permet de simplifier la structure de l'installation et d'en améliorer la robustesse.

En outre, l'installation 1 pour le suivi comporte selon l'invention un système permettant la mise en mouvement des mangeoires 50. Dans ce cas, les mangeoires 50 peuvent être fixées directement ou indirectement (e.g. par l'intermédiaire d'un moyen de pesée 20) à une traverse, ladite traverse étant apte à être déplacée au moins selon un axe, ledit axe étant sélectionné parmi un axe vertical, horizontal ou transversal, par un moyen de déplacement de façon à ajuster, à la taille de la volaille, la distance entre la zone de distribution 51 de l'aliment de la mangeoire 50 et le poste de pesée 30.

Le dispositif 100 pour le suivi individualisé ou l'installation 1 pour le suivi comprennent en outre ou sont couplés à un **module de traitement de données.** Ce module de traitement de données est relié aux moyens de pesée de l'aliment, aux moyens de pesée des volailles ainsi qu'aux moyens d'identification de préférence par des liaisons filaires. Il peut en outre être disposé à distance desdits moyens. Ainsi, de façon préférée, toutes les informations recueillies par le moyen d'identification 40 et les moyens de pesée 10, 20 sont transmises au module de traitement de données. Ce module de traitement de données comprend de préférence un récepteur pour la réception des données mesurées par les moyens de pesée 10, 20 et le moyen d'identification 40 de chaque dispositif 100 pour le suivi individualisé, et un calculateur pour le traitement desdites données mesurées. La communication entre les moyen d'identification 40 et les moyens de pesée 10, 20 et le récepteur de l'unité de traitement peut être filaire ou non filaire.

L'unité de traitement est prévue pour traiter les données récoltées afin d'en déduire des indices individuels de consommation pour chaque volaille de l'élevage. Outre la consommation quotidienne par animal, il est possible d'étudier la date, la fréquence et la durée des repas pour en tirer des conclusions sur le comportement alimentaire des volailles, et corréler ces informations à leur croissance. Par ailleurs, les données récoltées permettent au module de traitement de données de calculer l'indice de consommation, c'est-à-dire le rapport quantité d'aliment consommée par la volaille / gain de poids de la volaille.

Le suivi de l'évolution du poids de la mangeoire associé à l'identification de l'animal qui vient manger permet d'établir la courbe de consommation de cet animal. Le traitement de données pourra par ailleurs relever les heures de consommation (début, durée, fin) pour un animal afin d'affiner sa courbe de consommation.

L'étude de la consommation individuelle de volailles élevées en groupe au sol est particulièrement avantageuse puisque qu'elle permet d'introduire un nouveau critère de sélection de ces volailles qui correspond à l'efficacité alimentaire dans des conditions d'élevage classique.

## Revendications

1. Dispositif (100) pour le suivi individualisé de l'indice de consommation de volailles comprenant :
- un poste de pesée (30), ledit poste de pesée (30) comportant des parois latérales et une paroi frontale définissant un volume interne disponible apte à contenir une volaille,
- un moyen d'identification (40) d'une volaille, apte à identifier une volaille positionnée dans le volume interne disponible du poste de pesée (30) et à fournir une information d'identification de la volaille,
- un moyen de pesée (10) d'une volaille, ledit moyen de pesée (10) d'une volaille étant apte à mesurer le poids d'une volaille positionnée dans le volume interne disponible du poste de pesée (30) et à fournir une information de poids de la volaille,
- une mangeoire (50) contenant des aliments pour volaille, couplée à un moyen de pesée (20) des aliments, ledit moyen de pesée (20) des aliments étant apte à mesurer le poids des aliments contenus dans la mangeoire (50) et à fournir une information de poids de l'aliment, ladite mangeoire (50) comprenant une zone de distribution (51), ladite zone de distribution (51) étant accessible seulement à une volaille positionnée dans le volume interne disponible du poste de pesée (30), et
- un module de traitement de données couplé au moyen de pesée de la volaille (10) et au moyen de pesée de l'aliment (20) apte à générer un indice de consommation à partir des informations de poids fournies par le moyen de pesée (10) et par le moyen de pesée (20) des aliments, pour la volaille identifiée à partir de l'information d'identification fournie,
ledit dispositif étant **caractérisé en ce que** la mangeoire (50) est couplée à au moins un moyen de déplacement apte à déplacer la mangeoire (50) selon un axe horizontal et un axe vertical, de façon à ajuster la distance entre la zone de distribution (51) de l'aliment de la mangeoire (50) et le poste de pesée (30), à la taille de la volaille, et **en ce que** le poste de pesée (30) ne comporte pas de porte.

2. Dispositif pour le suivi individualisé selon la revendication 1 **caractérisé en ce que** le poste de pesée (30) comporte sur une paroi frontale comportant une ouverture (32) apte à laisser passer la tête de la volaille, ladite ouverture (32) présentant une forme définie par une hauteur et une largeur variable et, ladite largeur augmentant avec la valeur de hauteur sur une distance représentant plus de la moitié de la hauteur de ladite ouverture.

3. Dispositif pour le suivi individualisé selon la revendication 2 **caractérisé en ce que** l'ouverture (32) présente sensiblement une forme de trapèze ou de triangle, la base du triangle ou la base la plus longue du trapèze étant orientée vers la partie supérieure de la paroi frontale.

4. Dispositif pour le suivi individualisé selon l'une quelconque des revendications 1 à 3, **caractérisé en ce que** les parois latérales et la paroi frontale du poste de pesée (30) ne sont pas mobiles.

5. Dispositif pour le suivi individualisé selon l'une quelconque des revendications 1 à 4, **caractérisé en ce que** le poste de pesée (30) est associé à un système de contention (60) comportant au moins un moyen (61) d'adaptation du volume et/ou au moins un moyen d'obturation (62) d'une partie de l'entrée du poste de pesée (30), ledit moyen (61) d'adaptation du volume étant apte à réduire le volume interne disponible dudit poste de pesée (30) de façon à l'adapter à la taille de ladite volaille et ledit moyen d'obturation (62) d'une partie de l'entrée du poste de pesée (30) étant apte à empêcher l'entrée simultanée de plusieurs volailles dans le volume interne disponible dudit poste de pesée (30).

6. Dispositif pour le suivi individualisé selon la revendication 5 **caractérisé en ce que** le système de contention (60) est amovible.

7. Dispositif pour le suivi individualisé selon l'une des revendications 5 ou 6, **caractérisé en ce que** le poste de pesée comprend des organes de guidage (33) pour le système de contention (60) tels que des bras articulés, de rainures, des tiges télescopiques, des encoches ou des tasseaux.

8. Dispositif pour le suivi individualisé selon l'une quelconque des revendications 5 à 7, **caractérisé en ce que** le moyen d'adaptation (61) du volume permet de réduire la hauteur ainsi que la largeur du volume interne disponible du poste de pesée (30).

9. Dispositif pour le suivi individualisé selon l'une quelconque des revendications 1 à 8, **caractérisé en ce que** le moyen de déplacement de la mangeoire est de plus apte à la déplacer selon un axe transversal de façon à ajuster la distance entre la zone de distribution (51) de l'aliment de la mangeoire (50) et le poste de pesée (30), à la taille de la volaille.

10. Dispositif pour le suivi individualisé selon l'une quelconque des revendications 1 à 9, **caractérisé en ce que** le moyen d'identification (40) comporte un lecteur radiofréquence apte à recevoir une information provenant d'une étiquette radiofréquence fixée à ladite volaille.

11. Dispositif pour le suivi individualisé selon la revendication 10 **caractérisé en ce que** le lecteur radiofréquence est positionnée à proximité d'une paroi frontale ou latérale du poste de pesée (30).

12. Installation (1) pour le suivi individualisé de l'indice de consommation de volailles comportant plusieurs dispositifs (100) pour le suivi selon l'une des revendications 1 à 11.

13. Installation (1) pour le suivi selon la revendication 12, **caractérisée en ce que** le moyen de déplacement est apte à déplacer une traverse à laquelle sont fixées directement ou indirectement les mangeoires (50).

14. Installation (1) pour le suivi selon l'une des revendications 12 ou 13, **caractérisé en ce que** les postes de pesée (30) des dispositifs (100) pour le suivi individualisé sont fixés directement ou indirectement à une première traverse (81) et **en ce que** les mangeoires (50) des dispositifs (100) pour le suivi individualisé sont fixées directement ou indirectement à une seconde traverse (82).

## Patentansprüche

1. Vorrichtung (100) zur individualisierten Nachverfolgung der Futterverwertung von Geflügel, die umfasst:
- eine Wiegestation (30), wobei die Wiegestation (30) Seitenwände und eine Vorderwand umfasst, die ein verfügbares Innenvolumen definieren, das geeignet ist, ein Geflügel zu enthalten,
- ein Mittel (40) zur Identifikation eines Geflügels, das geeignet ist, ein in dem verfügbaren Innenvolumen der Wiegestation (30) positioniertes Geflügel zu identifizieren, und eine Identifikationsinformation des Geflügels zu liefern,
- ein Mittel (10) zum Wiegen eines Geflügels, wobei das Mittel (10) zum Wiegen eines Geflügels geeignet ist, das Gewicht eines in dem verfügbaren Innenvolumen der Wiegestation (30) positionierten Geflügels zu messen und eine Gewichtsinformation des Geflügels zu liefern,
- eine Futterstelle (50), die Nahrung für Geflügel enthält und an ein Mittel (20) zum Wiegen des Futters gekoppelt ist, wobei das Mittel (20) zum Wiegen des Futters geeignet ist, das Gewicht des in der Futterstelle (50) enthaltenen Futters zu messen und eine Gewichtsinformation des Futters zu liefern, wobei die Futterstelle (50) eine Verteilungszone (51) umfasst, wobei die Verteilungszone (51) lediglich für ein Geflügel zugänglich ist, das in dem verfügbaren Innenvolumen der Wiegestation (30) positioniert ist, und
- ein Datenverarbeitungsmodul, das an das Mittel (10) zum Wiegen des Geflügels und an das Mittel (20) zum Wiegen des Futters gekoppelt ist und geeignet ist, ausgehend von den Gewichtsinformationen, die von dem Wiegemittel (10) und von dem Mittel (20) zum Wiegen des Futters geliefert werden, für das ausgehend von der gelieferten Identifikationsinformation identifizierte Geflügel eine Futterverwertung zu erzeugen,
wobei die Vorrichtung **dadurch gekennzeichnet ist, dass** die Futterstelle (50) an mindestens ein Verlagerungsmittel gekoppelt ist, das geeignet ist, die Futterstelle (50) entlang einer horizontalen Achse und einer vertikalen Achse zu verlagern, derart dass der Abstand zwischen der Verteilungszone (51) des Futters der Futterstelle (50) und der Wiegestation (30) an die Größe des Geflügels angepasst wird, und dadurch, dass die Wiegestation (30) keine Tür umfasst.

2. Vorrichtung zur individualisierten Nachverfolgung nach Anspruch 1, **dadurch gekennzeichnet, dass** die Wiegestation (30) eine Vorderwand umfasst, die eine Öffnung (32) umfasst, die geeignet ist, den Kopf des Geflügels durchzulassen, wobei die Öffnung (32) eine Form aufweist, die durch eine variable Höhe und Breite definiert ist, und wobei die Breite mit dem Wert der Höhe über einen Abstand zunimmt, der mehr als die Hälfte der Höhe der Öffnung darstellt.

3. Vorrichtung zur individualisierten Nachverfolgung nach Anspruch 2, **dadurch gekennzeichnet, dass** die Öffnung (32) im Wesentlichen eine Trapez- oder Dreiecksform aufweist, wobei die Basis des Dreiecks oder die längste Basis des Trapezes hin zum oberen Teil der Vorderwand ausgerichtet ist.

4. Vorrichtung zur individualisierten Nachverfolgung nach einem der Ansprüche 1 bis 3, **dadurch gekennzeichnet, dass** die Seitenwände und die Vorderwand der Wiegestation (30) nicht beweglich sind.

5. Vorrichtung zur individualisierten Nachverfolgung nach einem der Ansprüche 1 bis 4, **dadurch gekennzeichnet, dass** die Wiegestation (30) mit einem Rückhaltesystem (60) verbunden ist, das mindestens ein Mittel (61) zur Anpassung des Volumens und/oder mindestens ein Mittel (62) zum Verschließen eines Teils des Eingangs der Wiegestation (30) umfasst, wobei das Mittel (61) zur Anpassung des Volumens geeignet ist, das verfügbare Innenvolumen der Wiegestation (30) derart zu vermindern, dass es an die Größe des Geflügels angepasst wird, und das Mittel (62) zum Verschließen eines Teils des Eingangs der Wiegestation (30) geeignet ist, den gleichzeitigen Eintritt mehrerer Geflügel in das verfügbare Innenvolumen der Wiegestation (30) zu verhindern.

6. Vorrichtung zur individualisierten Nachverfolgung nach Anspruch 5, **dadurch gekennzeichnet, dass** das Rückhaltesystem (60) abnehmbar ist.

7. Vorrichtung zur individualisierten Nachverfolgung nach einem der Ansprüche 5 oder 6, **dadurch gekennzeichnet, dass** die Wiegestation Führungsorgane (33) für das Rückhaltesystem (60) umfasst, wie beispielsweise Gelenkarme, Rinnen, ausziehbare Stangen, Nuten oder Leisten.

8. Vorrichtung zur individualisierten Nachverfolgung nach einem der Ansprüche 5 bis 7, **dadurch gekennzeichnet, dass** das Mittel (61) zur Anpassung des Volumens das Vermindern der Höhe sowie der Breite des verfügbaren Innenvolumens der Wiegestation (30) ermöglicht.

9. Vorrichtung zur individualisierten Nachverfolgung nach einem der Ansprüche 1 bis 8, **dadurch gekennzeichnet, dass** das Mittel zur Verlagerung der Futterstelle ferner geeignet ist, sie entlang einer Querachse zu verlagern, derart, dass der Abstand zwischen der Verteilungszone (51) des Futters der Futterstelle (50) und der Wiegestation (30) an die Größe des Geflügels angepasst wird.

10. Vorrichtung zur individualisierten Nachverfolgung nach einem der Ansprüche 1 bis 9, **dadurch gekennzeichnet, dass** das Identifikationsmittel (40) einen RF-Leser umfasst, der geeignet ist, eine Information zu empfangen, die von einem RF-Etikett stammt, das an dem Geflügel befestigt ist.

11. Vorrichtung zur individualisierten Nachverfolgung nach Anspruch 10, **dadurch gekennzeichnet, dass** der RF-Leser in der Nähe einer Vorder- oder Seitenwand der Wiegestation (30) positioniert ist.

12. Anlage (1) zur individualisierten Nachverfolgung der Futterverwertung von Geflügel, die mehrere Vorrichtungen (100) zur Nachverfolgung nach einem der Ansprüche 1 bis 11 umfasst.

13. Anlage (1) zur Nachverfolgung nach Anspruch 12, **dadurch gekennzeichnet, dass** das Verlagerungsmittel geeignet ist, einen Querträger zu verlagern, an dem die Futterstellen (50) direkt oder indirekt befestigt sind.

14. Anlage (1) zur Nachverfolgung nach einem der Ansprüche 12 oder 13, **dadurch gekennzeichnet, dass** die Wiegestationen (30) der Vorrichtungen (100) für die individualisierte Nachverfolgung direkt oder indirekt an einem ersten Querträger (81) befestigt sind, und dadurch, dass die Futterstellen (50) der Vorrichtungen (100) für die individualisierte Nachverfolgung direkt oder indirekt an einem zweiten Querträger (82) befestigt sind.

## Claims

1. A device (100) for individualized tracking of the consumption index of poultry comprising:
- a weighing station (30), said weighing station (30) including lateral walls and a front wall defining an available internal volume able to contain a poultry,
- a means for identifying (40) a poultry, able to identify a poultry positioned in the available internal volume of the weighing station (30) and to supply information identifying the poultry,
- a means for weighing (10) a poultry, said poultry weighing means (10) being able to measure the weight of a poultry positioned in the available internal volume of the weighing station (30) and to supply poultry weight information,
- a feeder (50) containing poultry feed, coupled to a feed weighing means (20), the feed weighing means (20) being able to measure the weight of feed contained in the feeder (50) and to supply feed weight information, said feeder (50) comprising a distribution zone (51), said distribution zone (51) being accessible to only one poultry positioned in the available internal volume of the weighing station (30), and
- a data processing module coupled with the poultry weighing means (10) and to the feed weighing means (20), able to generate a consumption index based on the weight information supplied by the weighing means (10) and by the feed weighing means (20), for the poultry identified based on the identification information supplied,
said device being **characterized in that** the feeder (50) is coupled with at least one means of movement able to move the feeder (50) along a horizontal axis and a vertical axis, so as to adjust the distance between the feed distribution zone (51) of the feeder (50) and the weighing station (30), to the size of the poultry, and **in that** the weighing station (30) does not include a door.

2. The individualized tracking device according to claim 1, **characterized in that** the weighing station (30) includes an opening (32) on one front wall able to allow the head of the poultry to pass, said opening (32) having a shape defined by a height and a variable width and said width increasing with the height value over a distance representing more than half of the height of said opening.

3. The individualized tracking device according to claim 2, **characterized in that** the opening (32) has substantially the shape of a trapezoid or a triangle, the base of the triangle or the base of the longest base of the trapezoid being oriented toward the upper part of the front wall.

4. The individualized tracking device according to any one of claims 1 to 3, **characterized in that** the lateral walls and the front wall of the weighing station (30) are not movable.

5. The individualized tracking device according to any one of claims 1 to 4, **characterized in that** the weighing station (30) is associated with a restraint system (60) including at least one volume adaptation means (61) and/or at least one means for blocking (62) a part of the entrance of the weighing station (30), said volume adaptation means (61) being able to reduce the available internal volume of said weighing station (30) so as to adapt it to the size of said poultry and said means for blocking (62) a part of the entrance of the weighing station (30) being able to prevent the simultaneous entrance of several poultry into the available internal volume of said weighing station (30).

6. The individual tracking device according to claim 5, **characterized in that** the restraint system (60) is removable.

7. The individualized tracking device according to one of claims 5 or 6, **characterized in that** the weighing station comprises guide members (33) for the restraint system (60) such as hinged arms, grooves, telescoping rods, notches, or battens.

8. The individualized tracking device according to any one of claims 5 to 7, **characterized in that** the volume adaptation means (61) allows reducing the height as well as the width of the available internal volume of the weighing station (30).

9. The individualized tracking device according to any one of claims 1 to 8, **characterized in that** the means of moving the feeder is also able to move it along a transverse axis so as to adjust the distance between the feed distribution zone (51) of the feeder (50) and the weighing station (30) to the size of the poultry.

10. The individualized tracking device according to any one of claims 1 to 9, **characterized in that** the means of identification (40) includes a radio-frequency reader able to receive information originating from a radio-frequency tag fastened to said poultry.

11. The individualized tracking device according to claim 10, **characterized in that** the radio-frequency reader is positioned in proximity to a front or lateral wall of the weighing station (30).

12. An installation (1) for individualized tracking of the consumption index of poultry including several tracking devices (100) according to one of claims 1 to 11.

13. The tracking installation (1) according to claim 12, **characterized in that** the means of movement is able to move a crossbar to which are fastened, directly or indirectly, the feeders (50).

14. The tracking installation (1) according to one of claims 12 or 13, **characterized in that** the weighing stations (30) of the individualized tracking devices (100) are fastened directly or indirectly to a first crossbar (81) and **in that** the feeders (50) of the individualized tracking devices (100) are fastened directly or indirectly to a second crossbar (82).
